# EUROPÄISCHE PATENTSCHRIFT

(11) **EP 3 873 659 B1**
(45) Veröffentlichungstag und Bekanntmachung des Hinweises auf die Patenterteilung: **01.05.2024**
(21) Anmeldenummer: 19794559.5
(22) Anmeldetag: 29.10.2019
(51) Int. Cl.: B01J 20/18, B01J 20/34, C02F 1/28, C02F 101/36

(54) **VERFAHREN ZUR ENTFERNUNG VON POLYFLUORIERTEN ORGANISCHEN VERBINDUNGEN AUS WASSER MITTELS EINES ADSORBENS UND DESSEN REGENERIERUNG**
METHOD FOR THE REMOVAL OF POLYFLUORINATED ORGANIC COMPOUNDS FROM WATER BY MEANS OF AN ADSORBENT AND REGENERATION THEREOF
PROCÉDÉ D'ÉLIMINATION DES COMPOSÉS ORGANIQUES POLYFLUORÉS DE L'EAU AU MOYEN D'UN ABSORBANT ET SA RÉGÉNÉRATION

(30) Priorität: 30.10.2018 EP 18203492
(43) Veröffentlichungstag der Anmeldung: 08.09.2021
(73) Patentinhaber: Helmholtz-Zentrum für Umweltforschung GmbH-UFZ, 04318 Leipzig (DE)
(72) Erfinder: GEORGI, Anett, 04289 Leipzig (DE); KOPINKE, Frank-Dieter, 04109 Leipzig (DE); MACKENZIE, Katrin, 04683 Naundorf (DE); NGUYEN, The Viet, 22041 Hamburg (DE); WOSZIDLO, Silke, 04277 Leipzig (DE); KÖHLER, Robert, 04105 Leipzig (DE)
(74) Vertreter: Gulde & Partner
(86) Internationale Anmeldenummer: PCT/EP2019/079452
(87) Internationale Veröffentlichungsnummer: WO 2020/089192

(56) Entgegenhaltungen:
- CN-A- 1 136 468
- CN-B- 103 991 948
- DE-A1-102013 206 066
- DA SILVA-RACKOV CELYNA K O ET AL: "Degradation of PFOA by hydrogen peroxide and persulfate activated by iron-modified diatomite", APPLIED CATALYSIS B: ENVIRONMENTAL, ELSEVIER, AMSTERDAM, NL, Bd. 192, 31. März 2016 (2016-03-31), Seiten 253-259, XP029519698, ISSN: 0926-3373, DOI: 10.1016/J.APCATB.2016.03.067
- A. ÖZGÜR YAZAYDIN ET AL: "Computing Adsorbate/Adsorbent Binding Energies and Henry's Law Constants from Molecular Simulations", ENVIRONMENTAL ENGINEERING SCIENCE., Bd. 26, Nr. 2, Februar 2009 (2009-02), Seiten 297-304, XP055607041, US ISSN: 1092-8758, DOI: 10.1089/ees.2008.0025

## Beschreibung

Die Erfindung betrifft ein Verfahren zur Entfernung von polyfluorierten organischen Verbindungen aus Wasser mittels eines Adsorbens.

Polyfluorierte organische Verbindungen (PFCs) sind organische Verbindungen mit einem Kohlenstoffgerüst, in dem Wasserstoff teilweise oder vollständig durch Fluor ersetzt ist. Sie bestehen häufig aus einer Kohlenstoffkette mit variabler Länge und einer hydrophilen Kopfgruppe, wie einer Carboxyl- oder Sulfonylgruppe. Diese als Tenside eingesetzten Verbindungen werden als Perfluoralkansäuren (PFAAs) bezeichnet. Durch die Stabilität der C-F-Bindung sind PFCs sehr beständig gegen biologischen, chemischen oder sogar thermischen Abbau.

PFCs sind künstliche, technisch synthetisierte Verbindungen, die in der Natur nicht vorkommen. Sie werden u. a. eingesetzt in Feuerlöschschäumen, in der Papier- und Textilindustrie, in der Galvanikindustrie und als Komponenten von Schmiermitteln und Imprägniermitteln. In den letzten zehn Jahren hat sich die Zahl von Standorten erhöht, die mit PFCs kontaminiert sind. Dies schließt auch Grundwasserkontaminationen ein, die bereits in einigen Fällen die Nutzung als Trinkwasserquelle beeinträchtigen. Perfluoralkylcarbonsäuren (PFACs) und darunter Perfluoroctansäure (PFOA) gehören zu den am häufigsten nachgewiesenen PFCs im Grundwasser.

Es besteht daher eine starke Nachfrage nach effizienten Technologien zur Entfernung von PFCs und insbesondere von PFACs aus kontaminiertem Wasser, einschließlich Industrieabwässern, aber auch kontaminiertem Grundwasser.

Nach dem Stand der Technik erfolgt eine adsorptive Entfernung von PFCs aus Wasser unter Verwendung von Aktivkohle (AC). Bekannt ist auch die Verwendung polymerbasierter Adsorber und eine Regeneration der mit PFCs beladenen Adsorbern.

Aufgrund der geringen Adsorptionsaffinitäten verschiedener PFCs in Kombination mit Konkurrenz- und Skalierungseffekten bei der Adsorption durch natürliche organische Stoffe (NOM) und/oder andere anorganische Stoffe und organische Verbindungen in komplexen Wassermatrices, ist die Betriebszeit von AC-Adsorbern vergleichsweise kurz.

Erschöpfte Aktivkohle kann durch Hochtemperaturbehandlung in speziellen Aufbereitungsanlagen unter bestimmten Voraussetzungen regeneriert werden. Nachteilig bei dieser Art von Regeneration sind jedoch die dafür notwendigen, hohen Transport- und Energiekosten.

Hinsichtlich eines chemischen Abbaus von PFACs wird allgemein davon ausgegangen, dass herkömmliche Oxidationsmethoden, die Oxidationsmittel und Radikale auf Sauerstoffbasis, wie Hydroxylradikale (OH^{·}), abgeleitet von O₃, O₃/UV, O₃/H₂O₂ und H₂O₂/Fe²⁺, verwenden, für den Abbau von PFACs nicht geeignet sind.

Hingegen sind Sulfatradikale (SO₄^{-·}), die durch Aktivierung von Peroxodisulfat (PODS, S₂O₈²⁻) oder Peroxomonosulfat (POMS, SO₅²⁻) gebildet werden können, zum Abbau von PFACs bekannt. Die Aktivierung der Persulfate erfolgt durch UV-Bestrahlung, Wärme oder Übergangsmetalle. Die Geschwindigkeitskonstanten für die Reaktion von Sulfatradikalen mit PFACs sind jedoch um Größenordnungen niedriger als für konkurrierende Reaktionen zwischen Sulfatradikalen und verschiedenen anorganischen Verbindungen wie Halogenidionen (Cl⁻, Br⁻) und Bicarbonat (HCO₃⁻), die im Grundwasser allgegenwärtig sind und auch in den meisten industriellen Abwässern vorkommen. NOM ist ein weiterer Radikalfänger im Oberflächen- und Grundwasser. Gleichzeitig sind die Konzentrationen der PFACs im zu behandelnden Wasser deutlich geringer als die Konzentrationen dieser Wasserinhaltsstoffe, was zu einem hohen Oxidationsmittelverbrauch durch unerwünschte Nebenreaktionen führt. Diese Umstände machen eine direkte chemische Behandlung von mit PFACs verunreinigtem Wasser durch Persulfate sehr ineffizient.

Weitere Einschränkungen einer direkten kontinuierlichen Persulfatdosierung für den Abbau von PFACs sind
i) die Kontamination des behandelten Wassers mit hohen Konzentrationen von Schwefelsäure und Sulfat als Endprodukt der Oxidation mittels Persulfaten und
ii) die Notwendigkeit eines kontinuierlichen Energieeintrags für die Erwärmung großer Wassermengen oder eine UV-Aktivierung der Persulfate.

AC- und polymerbasierte Harze als bisher am häufigsten verwendete Adsorbentien für PFCs im technischen Maßstab haben gravierende Einschränkungen bei der Regeneration durch nasschemische Oxidation (*wet chemical oxidation,* WCO-Methoden), da diese selbst als Radikalfänger wirken und dabei oxidiert, d. h. zerstört werden.

Diese Einschränkungen gelten auch für die sulfatradikalisch betriebene Oxidation, die zu
i) einem hohen Verbrauch an Persulfat (z. B. 0,5 kg PODS pro kg AC zur Regeneration chloroformbelasteter AC, Huling SG, Ko S, Park S, Kan E. Persulfate oxidation of MTBE- and chloroform-spent granular activated carbon. Journal of Hazardous materials 2011; 192(3): 1484-1490, und
ii) einem Verlust an Adsorptionskapazität bei Wiederverwendung durch oxidative Umwandlung der AC-Oberfläche oder Bildung gebundener Rückstände zwischen Transformationsprodukten von PFACs und der AC-Oberfläche führt.

Alternative organische Adsorbentien wie Anionenaustauscherharze, beispielsweise in der EP 1193242 A1 beschrieben, funktionalisierte organische Polymere oder immobilisierte Cyclodextrine wurden vorgeschlagen, die jedoch aufgrund fehlender Stabilität gegenüber starken Oxidationsmitteln wie z. B. Sulfatradikalen für eine nasschemische Oxidation von adsorbierten Verunreinigungen ebenfalls nicht geeignet sind.

DE 102013214514 A1 beschreibt ein Batchsystem mit ultrafeinen pulverförmigen Adsorbentien in Kombination mit Flockungsmitteln, um PFCs aus Wasser zu entfernen. Diese pulverförmigen Adsorbentien sind nicht zur Regeneration bestimmt, sondern bilden schließlich einen festen zu entsorgenden Abfall.

In US 8614351 B2 und US 8642804 B2 werden Adsorptionsverfahren für fluorhaltige organische Verbindungen mit einem Kohlenstoffgerüst von 2 bis 6 C-Atomen unter Verwendung von AC beschrieben, wobei das verbrauchte AC-Adsorptionsmittel durch Erhitzen auf moderate Temperaturen, d. h. vorzugsweise auf 150°C, regeneriert wird. Für längerkettige PFACs (mit ≥ 7 C-Atomen) einschließlich PFOA ist diese Methode aufgrund ihrer geringen Flüchtigkeit bei moderaten Temperaturen und moderaten pH-Werten nicht geeignet. Um eine PFAC-Verbindung ausreichend flüchtig zu machen, muss sie aus ihrem Salz in ihre protonierte Form überführt werden, was extrem saure pH-Werte erfordert (pH < pK_{A} < 2).

RU 2006126324 A beansprucht ein Verfahren, bei dem PFACs aus Wasser durch Zugabe eines nicht fluorierten Tensids und von Adsorptionspartikeln entfernt werden und das Adsorptionsmittel durch Extraktion mit Lösungsmittel/Wasser/Säure-Gemischen regeneriert wird, was zu einer Veresterung von PFACs führt, wobei die gebildeten Ester aus dem Lösungsmittel durch Destillation gewonnen werden können. Ziel ist hierbei, die Rückgewinnung von teuren fluorierten Tensiden aus industriellen Abwässern und deren Wiederverwendung zu erleichtern.

Bei der Behandlung von Wasser mit Spuren von PFCs ist auch die Beladung des Adsorbens bei Erschöpfung gering. In solchen Fällen ist eine vollständige Zerstörung anstelle einer Wiedergewinnung wünschenswert. Methoden zum effizienten Abbau von PFCs im adsorbierten Zustand an einem geeigneten Adsorbens sind jedoch bisher nicht verfügbar.

In der CN 101992061 A wird die Verwendung eines Verbundadsorptionsmittels, das aus ultrahochmolekularem Polyethylen, Aktivkohle, Sepiolitpulver, Attapulgitpulver, Zeolithpulver und einem Schaumbildner besteht, beschrieben. Eine Regeneration wird nicht offenbart.

CN 103 991 948 B offenbart ein Verfahren zur Entfernung von Perfluoroctanoat aus Abwasser mittels eines 13X Zeoliths und dessen Regenerierung, wobei der 13X Zeolith mit dem Perfluoroctanoat enthaltenden Abwasser als Suspension in Kontakt gebracht wird und anschließend mittels Ozon-Oxidation bei 20 bis 100°C regeneriert wird. C. da Silva-Rackov et al. offenbart ein Verfahren zur Entfernung von PFOA aus Wasser, wobei eisen-modifiziertes Diatomit mit PFOA enthaltendem Wasser in Kontakt gebracht wird und anschließend durch nasschemische Reaktion mit Natriumpersulfat bei pH 3, 9 oder 12 regeneriert wird ("Degradation of PFOA by hydrogen peroxide and persulfate activated by ironmodified diatomite", APPLIED CATALYSIS B: ENVIRONMENTAL, ELSEVIER, AMSTERDAM, NL, Bd. 192, 31. März 2016 (2016-03-31), Seiten 253-259).

Es ist Aufgabe der vorliegenden Erfindung, ein Verfahren zur Entfernung von polyfluorierten organischen Verbindungen aus Wasser mittels eines Adsorbens und vorzugsweise zur Regenerierung des Adsorbens bereitzustellen, das die Nachteile des Standes der Technik zumindest teilweise behebt.

Diese Aufgabe wird durch ein Verfahren mit den Merkmalen des Anspruch 1 gelöst Vorteilhafte Ausgestaltungen sind in den Unteransprüchen gekennzeichnet.

Erfindungsgemäß wird ein Verfahren zur Entfernung von polyfluorierten organischen Verbindungen aus Wasser mittels eines Adsorbens und dessen Regenerierung bereitgestellt, wobei als Adsorbens zumindest ein Zeolith eingesetzt wird, der mit dem Wasser in Kontakt gebracht wird und anschließend durch nasschemische Oxidation regeneriert wird. Die Oxidation erfolgt unter UV-Bestrahlung und bei einem pH-Wert im Bereich von pH 2,5 - 7,5. Als Oxidationsmittel werden Persulfat und/ oder Luftsauerstoff verwendet.

Die Oxidation unter UV-Bestrahlung erfolgt vorzugsweise mit einer Wellenlänge im Bereich von 240 - 450 nm und besonders bevorzugt im Bereich von 315 - 380 nm.

Nach einer bevorzugten Ausführungsvariante des Verfahrens erfolgt der Oxidationsschritt zur Regenerierung vorzugsweise bei einem pH-Wert im Bereich von pH 2,5 - 7, bevorzugt 3 - 5.

Vorzugsweise kann nach dem Oxidationsschritt ein Nachbehandlungsschritt erfolgen, bei dem der pH-Wert angehoben wird, vorzugsweise auf pH 8 bis 10.

Im Weiteren werden bevorzugte Zeolithe benannt und näher beschrieben.

Das zu reinigende Wasser kann unterschiedlicher Herkunft sein, beispielsweise Industrieabwässer, verunreinigtes Grundwasser und dergleichen, was jedoch nicht das erfindungsgemäße Verfahren limitiert.

Das in Kontaktbringen des Zeoliths mit dem Wasser kann nach verschiedenen, dem Fachmann bekannten Methoden erfolgen, beispielsweise in Festbett- oder Wirbelschichtreaktoren, mit denen auch problemlos das aufgereinigte Wasser wieder abgetrennt werden kann, z. B. durch Filtration, Sedimentation oder Zentrifugation.

Bevorzugterweise wird der zumindest eine Zeolith vom Wasser vor der Regenerierung abgetrennt. Abtrennen im Rahmen der Erfindung bedeutet nicht, dass der Zeolith vollständig wasserfrei sein muss. Dieser kann Restwassermengen enthalten, die bei der Regenerierung nicht stören.

Bei der Regeneration mittels nasschemischer Oxidation werden als Oxidationsmittel Persulfat und/oder Luftsauerstoff eingesetzt, vorzugsweise Persulfat.

Die Oxidation mittels Luftsauerstoff gilt als nasschemische Oxidation, da das Adsorbens nicht wasserfrei sein muss und der Luftsauerstoff durch das Adsorbens geleitet wird.

Bei dem Persulfat handelt es sich vorzugsweise um Peroxodisulfate oder Peroxomonosulfate, vorzugsweise Peroxodisulfate, vorzugsweise mit Natrium, Kalium oder Ammonium als Kation.

Die nasschemische Oxidation erfolgt bevorzugterweise unter Zuführung thermischer Energie, nämlich bei einer Temperatur im Bereich von 40 bis 100°C, vorzugsweise im Bereich von 60 bis 80°C.

Nach einer bevorzugten Ausführungsform des erfindungsgemäßen Verfahrens wird der zumindest eine Zeolith mit zumindest einem Übergangsmetall, ausgewählt aus der Gruppe Fe²⁺, Fe³⁺, Cu²⁺, vorzugsweise Fe³⁺ oder einem Erdalkalimetall, vorzugsweise Ca²⁺ oder Mg²⁺ durch dem Fachmann bekannte lonenaustauschprozesse beladen. Vorteilhafterweise kann dadurch die adsorptive Bindung von anionischen Schadstoffen unterstützt werden.

Bei der Oxidation mit thermisch aktiviertem Persulfat bietet eine Beladung mit Metallionen keine wesentlichen Vorteile, hingegen ist es vorteilhaft bei einer Oxidation unter UV-Bestrahlung, bei der als Oxidationsmittel Luftsauerstoff oder Persulfat eingesetzt werden, Übergangsmetallionenen, vorzugsweise Fe³⁺ zu verwenden, insbesondere bei PFAAs.

Der zumindest eine Zeolith kann in verschiendensten Varianten zum Einsatz kommen, vorzugsweise als Pulver, Granulat und/oder Pellets.

Zeolithe sind mikroporöse anorganische Adsorbentien mit einem regelmäßigen Gerüst- und Kanalsystem und einer hohen spezifischen Oberfläche. Heutzutage werden neben einigen wenigen Zeolithen, die in der Natur vorkommen, eine Vielzahl von Gerüsttypen synthetisch hergestellt. Das Modul, d.h. das molare SiO₂ zu Al₂O₃-Verhältnis des Zeolithen definiert die Ladungsdichte auf der inneren Oberfläche des Zeoliths, da jedes Al eine negative Ladung erzeugt. Zur Adsorption von PFCs an verschiedenen Zeolithen ist bekannt, dass deren Adsorptionskapazitäten signifikant geringer sind als bei anderen untersuchten Adsorbentien (AC), was auf die schlechte Zugänglichkeit von Perfluoroktylsulfonsäure und PFOA zur inneren Oberfläche des mikroporösen Adsorbens zurückzuführen ist. So sind Meso- und Makroporen und nicht Mikroporen, die üblicherweise in den Zeolithen dominieren, für die Diffusion und Adsorption von PFOA geeignet. Lediglich ein FAU-Typ-Zeolith (NaY) mit Modul = 80 zeigte in einer Studie als Adsorbens für Perfluoroktylsulfonsäure in vergleichsweise hohen residualen Konzentrationen (≥ 1 mg/l) eine Adsorptionsaffinität in einem mit granularen ACs vergleichbaren Bereich, Ochoa-Herrera V, Sierra-Alvarez R. Removal of perfluorinated surfactants by sorption onto granular activated carbon, zeolite and sludge. Chemosphere 2008; 72(10): 1588-1593. Bei FAU-Zeolithen wird der größte Teil des Porenvolumens durch sogenannte Supercages an Kanalkreuzungen gebildet, die größere Durchmesser (1,2 nm) als die Kanaldurchmesser bei allen Zeolithtypen (<1 nm) aufweisen.

Daher ist es für den Fachmann überraschend, dass mit Zeolithen gemäß dem erfindungsgemäßen Verfahren, sehr gute Reinigungsleistungen erzielt werden können.

Der zumindest eine Zeolith ist vorzugsweise ausgewählt aus der Gruppe mit dem Gerüsttyp: BEA (Beta polymorph A-Typ), FER (Ferrierit-Typ), MOR (Mordenit-Typ), MTW (ZSM-12) und/oder FAU (Faujasit-Typ).

Besonders bevorzugt werden ein Zeolith vom BEA-Typ und vom FAU-Typ eingesetzt, die vorzugsweise ein Modul von 10 bis 200 aufweisen. Diese weisen ein Gerüst mit Kanälen auf, die aus Ringen von 10 oder 12 T-Atomen (T = Si oder AI) bestehen.

Bevorzugt ist auch eine Kombination des Zeolithen vom BEA-Typ mit einem Zeolithen vom FAU-Typ, die vorzugsweise jeweils ein Modul von 10 bis 200 aufweisen. Diese Kombination der beiden Zeolith-Typen beim Einsatz als Festbettadsorber erfolgt vorzugsweise derart, dass diese räumlich getrennt, d.h. nacheinander durchströmt werden. So besteht das Adsorberbett aus einem mit FAU-Zeolith gefüllten Eingangsbereich und einem zweiten Bereich mit BEA-Zeolith. Die damit verbundenen Vorteile werden nachstehend im Rahmen der Beispiele beschrieben.

Die Einhaltung eines definierten pH-Regimes führt zu besonders vorteilhaften Ergebnissen. Beispielhaft ist dafür der Abbau von adsorbierten PFACs in einem WCO-Prozess durch Kontaktieren des beladenen Zeoliths in einer Lösung von PODS oder POMS, vorzugsweise mit Natriumperoxodisulfat, und Erhitzen auf eine Temperatur von 60 bis 90°C für mehrere Stunden. Durch diese Behandlung erfolgen eine effiziente Nutzung des Oxidationsmittels, ein Schutz des Zeoliths und die vollständige Desorption des Reaktionsprodukts Fluorid.

Zur weiteren Verdeutlichung sind folgende, bevorzugte Randbedingungen herauszustellen. Um die Dominanz von Sulfatradikalen gegenüber Hydroxylradikalen sicherzustellen, ist ein neutraler bis leicht saurer pH-Wert erforderlich (Vermeidung der radikalen Crossover-Reaktion SO₄•⁻ + OH⁻ → SO₄²⁻ + OH•). Stark saure Bedingungen würden dazu führen, dass Al oder Si aus dem Zeolithgerüst austreten und diesen schließlich zerstören. Für die schnelle Freisetzung von Fluorid (das Mineralisierungsprodukt von PFCs) aus dem Zeolith ist ein leicht alkalischer pH-Wert erforderlich.

Es wurde festgestellt, dass Fluorid von verschiedenen Zeolithen adsorbiert wird. Dies könnte dazu führen, dass Fluorid vom Regenerationsschritt in den nächsten Adsorptionsschritt überführt wird, wo Fluorid in das gereinigte Wasser übertritt. Da es Einschränkungen für die Fluoridemissionen (aufgrund von dessen potenzieller Toxizität) gibt, muss eine solche Übertragung unbedingt vermieden werden. Diese Probleme werden innerhalb dieser Erfindung durch ein kontrolliertes pH-Regime während der Regeneration des Zeolith-Adsorptionsmittels mit Persulfaten gelöst, das eine stabile Leistung der Zeolithe in wiederholten Adsorptions-Regenerations-Zyklen gewährleistet und die Verschleppung von Fluorid verhindert.

Der zumindest eine Zeolith kann in Form eines Festbettes oder als Suspension in einer Wirbelschicht vorliegen.

Bei dem Einsatz des zumindest einen Zeolithen in Form eines Festbettes wird dieser beim Oxidationsschritt vorzugsweise mit der Persulfat-Lösung gespült. Dabei ist das Verhältnis vom Volumen des Festbettes zum Volumen der Persulfat-Lösung vorzugsweise 4 - 20.

Nach einer bevorzugten Variante wird dabei das Festbett periodisch mit der Persulfat-Lösung gespült.

Alternativ ist es bevorzugt, dass der Zeolith als wässrige Suspension vorliegt.

Das erfindungsgemäße Verfahren bietet folgende Vorteile:
i) Erhöhung der lokalen Schadstoffkonzentration am Ort von deren chemischer Zerstörung um mehrere Größenordnungen,
ii) Eliminierung von Radikalquenchern durch spezielle Trennung von Zielschadstoffen und Wassermatrixkomponenten, und
iii) das Adsorptionsmittel ist selbst chemisch stabil gegen aggressive Oxidationsradikale und andere ungünstige Bedingungen, wie beispielsweise unterschiedliche pH-Werte, erhöhte Temperaturen.

Gleichzeitig ist eine nasschemische Oxidation (WCO) leicht vor Ort durchführbar, wodurch Kosten für Transport und spezielle Hochtemperaturbehandlungsanlagen vermieden werden können.

Im Vergleich zur Adsorptionsmittelregeneration durch Lösungsmittelextraktion hat die chemische Oxidation den Vorteil der Mineralisierung von PFCs (d. h. Umwandlung in CO₂ und verdünnte HF) anstelle der Übertragung des Schadstoffs in eine andere Phase (Extraktionslösungsmittel), die erneut behandelt oder sicher entsorgt werden muss.

Es wird somit das Problem der effizienten Entfernung von PFCs und insbesondere PFAAs aus Wasser mit anschließender vollständiger Zerstörung gelöst, indem die Schritte der Adsorption an einem Zeolith-Adsorptionsmittel und der anschließenden Behandlung des beladenen Zeoliths durch WCO mit Persulfaten bei einem kontrollierten pH-Wert kombiniert werden.

Das erfindungsgemäße Verfahren weist folgende Vorteile auf:
i) Das Zeolith-Adsorptionsmittel kann in mehreren Zyklen ohne Effizienzverlust für die PFC-Adsorption wiederverwendet werden.
ii) Das große Volumen des behandelten Wassers bleibt chemisch unverändert, da PFCs nur durch Adsorption entfernt und deshalb keine Chemikalien zugesetzt werden.
iii) Es verbleibt eine vergleichsweise geringe Menge an Regenerationslösung mit umweltverträglichem Natriumsulfat und -fluorid als Endprodukten aus umweltgefährdenden PFCs.

Überraschenderweise zeigte sich im Rahmen der Erfindung auch, dass Zeolithe und insbeondere BEA-Zeolithtypen ausgezeichnete Adsorbentien für PFAAs sind, obwohl ihr Kanalsystem mikroporös ist und eine inhärente negative Oberflächenladung aufweist, von der zu erwarteten ist, dass diese anionische Adsorbate wie PFAAs abstößt.

Unerwartet sind BEA-Zeolithe wesentlich effizientere Adsorbentien im Bereich der für das erfindungsgemäße Verfahren relevanten niedrigen PFC-Konzentrationen als Zeolithe vom FAU-Typ.

So kann, wie bereits beschrieben, durch eine geeignete Kombination verschiedener Zeolithtypen eine optimale Adsorptionsperformance über einen breiten Konzentrationsbereich von 10⁻⁶ bis 10² mg/l von PFCs ermöglicht werden.

Diese Zeolithe erlauben den Zugang von negativ geladenen Persulfat-Oxidationsmittelspezies für den chemischen Abbau und ermöglichen schließlich die Mineralisierung von adsorbierten PFCs. Ein Fachmann würde erwarten, dass die elektrostatische Abstoßung zwischen Zeolithoberflächen und beteiligten Schadstoff- und Reaktantenarten, die allesamt Anionen sind, in Kombination mit Porengrößenbeschränkungen innerhalb mikroporöser Zeolithe der Machbarkeit des erfindungsgemäßen Verfahrens stark entgegenwirkt.

Die Oxidation von PFCs, die im Zeolith adsorbiert werden, kann jedoch zu Problemen führen, da - in Abhängigkeit vom Zeolithbeladungsgrad - große Mengen an Schwefelsäure aus der Persulfatzersetzung sowie Flusssäure aus dem PFC-Abbau produziert werden. Bei unsachgemäßem Betrieb kann der wertvolle Zeolith beschädigt werden und seine Adsorptionseffizienz durch signifikantes Auslaugen von Si und/oder Al aus der Zeolithstruktur und Zerstörung der Porenstruktur des Zeoliths verlieren.

Zusammenfassend bestehen die Kernideen der Erfindung darin, hohe lokale Konzentrationen der beiden Reaktanden (Schadstoff und Oxidationsmittel) in einem mikroporösen Adsorbens zusammenzuführen und dort unter milden Reaktionsbedingungen eine chemische Abbaureaktion einzuleiten, die im Rahmen der üblichen Wasseraufbereitungsanlagen vor Ort realisiert werden kann. Durch die hohe und selektive lokale Anreicherung der angestrebten PFC-Schadstoffe kann das Oxidationsmittel mit einer wesentlich höheren Effizienz eingesetzt werden als bei der direkten Behandlung der Wasserphase erreichbar wäre. Dieser Ansatz gelingt überraschend gut, obwohl alle Stoffe, nämlich Zeolithoberfläche, Persulfat und PFAAs unter Reaktionsbedingungen negativ geladen sind und sich demnach abstoßen sollten anstatt bevorzugt zusammen zu kommen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend anhand von Beispielen näher erläutert.

### Vergleichsbeispiel 1 / Variante des Verfahrens mit Festbettadsorber

Die Durchführung des Verfahrens erfolgt mit einem klassischen Festbettadsorber, der vom zu behandelnden Wasser durchströmt wird. Der zumindest eine Zeolith liegt in Granulatform im Größenbereich von 0,3 -10 mm vor.

In einer bevorzugten Ausführungsform der Erfindung werden die Art des Zeoliths oder dessen Kombination basierend auf der Einströmkonzentration von PFAAs in das zu behandelnde Wasser ausgewählt.

Für eine Gesamtkonzentration an PFAAs von ca. 2 mg/l besteht das Adsorberbett aus einem mit FAU-Zeolith gefüllten Eingangsbereich (nahe dem Zufluss) und einem zweiten Bereich (nahe dem Abfluss) mit BEA-Zeolith. Der Zeolith vom FAU-Typ ist für die Aufnahme hoher Mengen an PFCs verantwortlich, während der Zeolith vom BEA-Typ als sogenannter Polizeiadsorber fungiert, der die Restkonzentration an PFCs in der wässrigen Phase weiter auf sehr niedrige Werte reduziert.

Dieser Ansatz kombiniert vorteilhaft das unterschiedliche Adsorptionsverhalten der beiden Zeolithtypen für PFCs. Wenn der Zeolith-Adsorber eine bestimmte Menge an PFCs durch Adsorption gesammelt hat oder eine bestimmte, begrenzende Konzentration an PFCs im Abwasser erreicht ist, wird das Adsorberbett vorübergehend vom Wasserstrom getrennt und mit Persulfat kontaktiert. Das heißt, eine Persulfatlösung wird in den Festbettadsorber gespült und über ein Reservoir mit Hilfe einer Pumpe rezirkuliert, wobei das Verhältnis von Adsorberbettvolumen zum Flüssigkeitsvolumen im Reservoir im Bereich von 4 bis 20 liegt.

Das Adsorberbett wird durch eine externe Wärmequelle für einen Zeitraum von 5 bis 48 h (Regenerationszeit) auf eine Temperatur zwischen 50 und 90°C erwärmt. Der Reservoirbehälter wird nicht beheizt und gegebenenfalls durch Kühlung auf Temperaturen <40°C gehalten.

Die Reservoirlösung wird hinsichtlich Persulfatkonzentration und pH-Wert überwacht und mit einer Base versetzt, um den pH-Wert in einem Bereich von pH = 2,5 - 7,5, vorzugsweise in einem Bereich von 2,5 - 7, und besonders bevorzugt in einem Bereich von pH = 3 - 5 zu halten.

Der Durchfluss zur Rückführung der Persulfatlösung durch das Adsorberbett wird so eingestellt, dass eine Verweilzeit im Adsorber von 5 bis 30 min, vorzugsweise 10 min erreicht wird.

Der Fortschritt des Abbaus der PFC wurde im vorliegenden Beispiel durch die Analyse von freigesetztem Fluorid in der Reservoirlösung verfolgt. Die Fluoridkonzentration wurde durch Einbau einer Messzelle mit integrierter Fluorid-selektiver Elektrode gemessen bzw. extern unter Nutzung eines lonenchromatographen.

Nach der Oxidationsphase wird die persulfathaltige Regenerationslösung durch eine leicht alkalische Waschlösung (pH = 8 - 10) ersetzt, während die Rezirkulation durch den abkühlenden Adsorber für 1 bis 5 h fortgesetzt wird.

Nach dieser letzten Behandlung kann der Zeolithadsorber für den nächsten Adsorptionszyklus mit kontaminiertem Wasser wiederverwendet werden.

Das zuvor beschriebene kontinuierliche Regenerationsverfahren funktioniert zuverlässig, hat aber eine inhärente Einschränkung: Durch die thermische Aktivierung von Persulfaten entstehen die reaktiven Sulfatradikale im gesamten erwärmten Wasservolumen, d.h. im Intrapartikelporenwasser und im Zwischenpartikelwasser. Der Zielschadstoff wird jedoch im Intrapartikelporenvolumen des Zeolith-Pellets angereichert. So trifft ein Teil der erzeugten kurzlebigen Radikale nicht auf die Zielmoleküle. Sie sind "verschwendet".

Um diesen Effizienzverlust zu minimieren, zielt eine bevorzugte Version des Regenerationsverfahrens darauf ab, den Anteil des interpartikulären Wassers zugunsten des intrapartikulären Wassers zu minimieren. Dazu wird das Zeolith-Festbett in kurzen Spülzyklen (für einige Minuten) mit frischer Persulfatlösung wiederholt gewaschen, gefolgt von Entleerungsphasen. Der spontane Abfluss des Großteils der interpartikulären Persulfatlösung kann durch das kurzzeitige Einpressen von Gas von oben durch das Festbett unterstützt werden. Auf diese Weise kann das Verhältnis zwischen den beiden Wasserfraktionen zugunsten des gewünschten Reaktionsraumes, dem intrapartikulären Porenvolumen, deutlich verschoben werden. Der Verbrauch an Oxidationsmittel (Persulfat) wird so signifikant verringert.

### Vergleichsbeispiel 2 / Variante des Verfahrens mit Adsorbersuspension

Pulverförmiger Zeolith (Partikel im nm bis µm Größenbereich) wird zu dem mit PFCs verunreinigten Wasser zugegeben und anschließend durch eine geeignete Phasentrenntechnik (Filtration, Sedimentation oder Zentrifugation) von der Reinwasserphase getrennt. Dies kann im Batch-Modus mit statischer Filtration oder Sedimentation oder im kontinuierlichen Modus mit Cross-Flow-Filtration mit geeigneten Membran- oder Keramikfiltern erfolgen.

Das zeolithfreie Wasser, aus dem PFCs durch Adsorption entfernt wurden, wird abgeleitet.

Der mit PFCs beladene nasse Zeolithkuchen oder die konzentrierte Zeolithsuspension werden durch Behandlung mit Persulfat regeneriert. Dazu werden der nasse Zeolithkuchen oder die konzentrierte Zeolithsuspension mit einem Salz oder einer konzentrierten Lösung von PODS oder POMS, vorzugsweise Natriumperoxodisulfat, vermischt, was zu einer konzentrierten Suspension mit einem Feststoff/Wasser-Verhältnis von 0,05 bis 0,5 kg/l führt, die kontinuierlich gerührt und für einen Zeitraum von 5 - 48 h (Oxidationsperiode) auf eine Temperatur zwischen 50 und 90°C erhitzt wird.

Alternativ oder zusätzlich wird Persulfat durch Bestrahlung mit UV-Licht (bevorzugt im Wellenlängenbereich von 240 bis 280 nm) während der Oxidationszeit aktiviert.

Der pH-Wert der Suspension bei der Oxidation wird durch Zugabe von Base, in einem Bereich von 2,5 - 7,5 vorzugsweise in einem Bereich von pH = 2,5 - 7,5, besonders bevorzugt in einem pH = 3 - 5, gehalten. Als Nachbehandlung nach der Oxidationsperiode wird eine Base zugegeben, um den pH-Wert auf einen Bereich von pH = 8 - 10 anzuheben, während das Rühren für 1 bis 5 h fortgesetzt wird.

Nach dieser letzten Behandlung wird der Zeolith durch Sedimentation oder Filtration von der Regenerationslösung abgetrennt und kann für den nächsten Adsorptionszyklus verwendet werden.

Das beschriebene Regenerationsverfahren funktioniert zuverlässig, ist aber mit der gleichen Einschränkung wie das in Beispiel 1 beschriebene Verfahren behaftet, dem parasitären Abbau von wertvollem Oxidationsmittel (Persulfate) außerhalb des bevorzugten Reaktionsraums. Daher zielt eine alternative Version der Zeolithregeneration darauf ab, den interpartikulären Wasseranteil zu minimieren, z.B. durch Zentrifugation der Zeolithsuspension. Das noch persulfathaltige Zentrifugationssediment wird dann bei 50 bis 90°C thermisch behandelt, abgekühlt und entweder mit frischer Persulfatlösung oder mit leicht alkalischem Wasser gewaschen (zum Ablösen des gebildeten Fluorids). Dann kann der nächste Regenerationszyklus durch Zentrifugation gestartet werden. Durch Zentrifugation wird nur das Interpartikelwasser ausgetrieben, nicht jedoch das Intraporenwasser.

### Vergleichsbeispiel 3 / Entfernung von PFOA aus Wasser

Die Adsorption von PFOA an verschiedenen Zeolithtypen (alle mit Modulen im Bereich von 15 - 40) wurde in Batch-Experimenten bestimmt, wobei 500 mg/l des Zeolithpulvers dem mit 1 mg/l PFOA verunreinigten Brauchwasser zugesetzt wurden. Die verbleibende PFOA-Konzentration in der Wasserphase wurde durch LC-MS-Analyse (Liquid-Chromatographie-Massenspektometrie) nach 1 d Schütteln zur Gleichgewichtseinstellung und anschließender Phasentrennung durch Zentrifugation bestimmt.

**Tabelle 1 zeigt die Ergebnisse der Wasseraufbereitung.**

| Zeolith-Gerüsttyp | Restfraktion von PFOA in Wasser (%) nach Behandlung | PFOA-Beladung von Zeolith (mg/g) | Restkonzentration von PFOA in Wasser (mg/l) |
|---|---|---|---|
| FAU | 55,0 | 0,90 | 0,55 |
| BEA | 0,7 | 1,99 | 0,007 |
| Fe-BEA (durch lonenaustausch mit Fe^{2+/3+} beladen, Fe-Gehalt 1,5 Ma%) | 0,3 | 1,99 | 0,003 |

Offensichtlich unterscheiden sich die verschiedenen Zeolith-Typen signifikant in ihrer Sorptionsaffinität gegenüber PFOA. So ermöglichen die Zeolith-Typen BEA und Fe-BEA eine effektive Abtrennung von PFOA im Bereich niedriger Konzentrationen.

### Vergleichsbeispiel 4 / Oxidative Regeneration eines Zeolithpulvers in Suspension im Batch-Modus

1 g eines Zeolithpulvers mit BEA-Gerüsttyp und Modul 30 mit 1,3 Ma.% Fe (durch lonenaustausch beladen) wurde in 1 l Brauchwasser mit 0,1 mg/l PFOA zugegeben und für 4 h gerührt. Anschließend wurde der Zeolith mit adsorbiertem PFOA durch Zentrifugation abgetrennt, während die gereinigte Wasserphase mit < 0,1 µg/l PFOA entsorgt wurde. 5 ml einer Lösung von 0,15 M Natriumperoxodisulfat in Wasser wurden dem PFOA-beladenen Zeolith zugesetzt, was zu einem Feststoff/Wasser-Verhältnis von 0,2 kg/l führte. Das Gemisch wurde unter Schütteln für 24 h auf eine Temperatur von 70°C erhitzt. Während dieser Zeit wurde der pH-Wert der Suspension durch Zugabe von NaOH-Lösung im Bereich von pH 3 bis 5 gehalten. Anschließend wurden ein Aliquot der Suspension entnommen, mit deionisiertem Wasser auf ein Feststoff/Wasser-Verhältnis von 0,02 kg/l verdünnt, der pH-Wert durch Zugabe von NaOH auf 10 eingestellt und die Suspension zentrifugiert: Die Fluoridkonzentration in der klaren wässrigen Phase wurde durch lonenchromatographie bestimmt.

Die in der Wasserphase nachgewiesene Fluoridkonzentration entspricht einer Ausbeute von (97±5)% des ursprünglich als PFOA vorliegenden Gesamtfluorids, was eine vollständige Mineralisierung von PFOA belegt. Der Zeolith wurde für die Adsorption von PFOA, wie vorstehend beschrieben, ohne signifikante Beeinträchtigung der Adsorptionsleistung in mehreren Adsorptions-Oxidations-Zyklen wiederverwendet.

### Vergleichsbeispiel 5 / Festbett-Zeolith-Adsorber mit Regeneration im kontinuierlichen Spülmodus

Eine Glassäule mit Wassermantel (ID = 3 cm, I = 30 cm) wurde mit 200 g eines pelletierten Zeoliths mit BEA-Gerüsttyp und Modul 30 gefüllt, der 1,3 Ma.-% Fe (eingebracht durch lonenaustausch) enthielt. Brauchwasser mit einem PFOA-Gehalt von 100 µg/l wurde mit einem Durchfluss von 10 ml/min durch die Säule gepumpt. Bei einem Durchsatz von 1500 I hatte das aus der Kolonne austretende Abwasser eine PFOA-Konzentration < 0,01 µg/l. Während dieser Zeit wurde der Zeolith mit 0,15 g PFOA beladen.

Anschließend wurde das Zeolith-Festbett regeneriert, indem es mit einer Lösung von Natriumperoxodisulfat (0,45 M) im Kreislauf mit einem angeschlossenen Reservoir gespült wurde. Während dieser Regenerationsphase wurde das Adsorberbett auf eine Temperatur von 70°C erwärmt.

Als Reservoir wurde ein Behältnis mit einem Gesamtvolumen von 100 ml verwendet, das zunächst 50 ml deion. Wasser und 5,3 g des Oxidationsmittels enthielt. Die Strömungsrichtung durch die Zeolithsäule war die gleiche wie im Adsorptionsschritt (nach oben oder unten). Im Reservoir wurde der pH-Wert der Lösung durch ein automatisches Titrationssystem (mit 2 M NaOH) in einem Bereich von pH 3 - 5 gehalten. Nach 30 h Regeneration wurde der pH-Wert der Reservoirlösung auf pH 10 angehoben und während der Rezirkulation der Lösung durch die Säule für eine weitere Stunde konstant gehalten. Danach wurde die Reservoirlösung mittels lonenchromatographie analysiert.

Die ermittelte Fluoridkonzentration entsprach >90% des ursprünglich vorhandenen Gesamtfluorids (als PFOA-Beladung) auf dem Zeolith, was eine nahezu vollständige Mineralisierung von PFOA anzeigt. Die Gesamtkonzentration von Perfluoralkansäuren (PFOA und kürzerkettige Oxidationszwischenprodukte) in der Reservoirlösung betrug < 0,1 µg/l.

Dies beweist, dass nicht nur der Zielschadstoff PFOA, sondern auch kürzerkettige, als Zwischenprodukte gebildete fluorierte Säuren abgebaut wurden. Danach wurden die Reservoirlösung entsorgt und die Zeolithsäule für den nächsten Adsorptionszyklus wiederverwendet, wobei erneut 1500 I Brauchwasser mit 100 µg/l PFOA behandelt wurden, wobei eine Abwasserkonzentration von < 0,01 µg/l erreicht wurde.

### Vergleichsbeispiel 6 / Festbett-Zeolith-Adsorber mit Regeneration im Porenvolumen-Aus-tauschmodus

Eine Festbett-Adsorbersäule wurde wie in Beispiel 3 beschrieben mit PFOA beladen. Dann wurde der Zeolith durch das folgende Verfahren regeneriert: Die Säule wurde auf 90°C erwärmt. Dann wurde es mit 100 ml einer 0,1 M Natriumperoxodisulfatlösung gespült. Nach 5 min wurde die Säule durch ein Bodenventil entleert. Die Restlösung wurde durch einen kurzen Impuls mittels Druckluft von oben nach unten entfernt. Die gesammelte Persulfatlösung (ca. 50 ml) wurde für den nächsten Spülvorgang bei Umgebungstemperatur gelagert. Die beheizte Säule wurde für weitere 10 min bei der Regenerierungstemperatur gehalten. Dann wurde sie für 5 min mit 50 ml einer Mischung aus gesammelter und frischer Persulfatlösung (0,05 M) gefüllt, die mit NaOH auf einen nahezu neutralen pH-Wert vorjustiert wurde. Diese periodische Befüllung und Entwässerung der Zeolith-Säule wurde mehrmals wiederholt, bis der Fluoridgehalt in der Entwässerungslösung unter einen Grenzwert von 1 µg/l gefallen war. Die Menge an Persulfat, die notwendig war, um eine 90%-ige Mineralisierung der adsorbierten PFOA zu erreichen, betrug etwa die Hälfte der Menge, die in Beispiel 3 erforderlich war.

### Beispiel 7 / Verwendung einer Adsorbersuspension mit Regenerierung durch eine Kombination von Oxidation mit Luftsauerstoff unter UV-Bestrahlung und Nachoxidation mit Persulfat

0,2 g eines Zeolithpulvers mit einem BEA-Gerüsttyp und Modul 30 mit 1,3 Ma.% Fe (eingebracht durch lonenaustausch) wurden in 1 l Brauchwasser mit 0,02 mg/l PFOA zugegeben und für 4 h gerührt. Anschließend wurde der Zeolith mit adsorbierter PFOA durch Zentrifugation abgetrennt, während die gereinigte Wasserphase mit < 0,1 µg/l PFOA entfernt wurde. Für den Regenerationsschritt wurden dem PFOA-beladenen Zeolith 100 ml deionisiertes Wasser zugegeben, was zu einem Feststoff/Wasser-Verhältnis von 2 g/l führte. Diese Regenerationssuspension wurde in ein Becherglas gefüllt und von oben mit einer UVA-Lampe (Emissionsspektrum im Bereich von 315 bis 390 nm) für 24 h bestrahlt. Anschließend wurden diese Suspension zentrifugiert und der gewonnene Zeolith zur erneuten Adsorption von PFOA wie vorstehend beschrieben verwendet, ohne signifikante Verluste in der Abscheideleistung in mehreren Adsorptions-Oxidations-Zyklen. Die wässrige Phase aus dem Regenerationsschritt enthält kein nachweisbares PFOA (< 0,001 µg/l), sondern kürzerkettige Abbauprodukte, wie Perfluorbuttersäure, die mittels LC-MS-Analyse nachgewiesen wurden. Die Regenerationslösung wurde zur vollständigen Mineralisierung der PFOA-Abbauprodukte weiterbehandelt. Dies geschah durch Zugabe einer kleinen Menge Natriumperoxodisulfat (1 mM) und Bestrahlung mit einer UVC-Lampe (254 nm Emissionswellenlänge) für 4 h. Danach betrug die Summenkonzentration aller fluorierten organischen Verbindungen in der wässrigen Phase < 0,1 µg/l.

Dieses Beispiel veranschaulicht, dass PFOA nach Adsorption an einen Zeolith vom BEA-Typ, der durch lonenaustausch eingebrachtes Eisen enthält, allein durch den Kontakt mit Sauerstoff aus der Luft unter Bestrahlung mit UVA-Licht (ähnlich dem solaren UV-Spektrum) abgebaut werden kann.

## Patentansprüche

1. Verfahren zur Entfernung von polyfluorierten organischen Verbindungen aus Wasser mittels eines Adsorbens und dessen Regenerierung, wobei als Adsorbens zumindest ein Zeolith eingesetzt wird, der mit dem Wasser in Kontakt gebracht wird und anschließend durch nasschemische Oxidation regeneriert wird, **dadurch gekennzeichnet, dass** die Oxidation unter UV-Bestrahlung und bei einem pH-Wert im Bereich von pH 2,5 - 7,5 erfolgt und dass als Oxidationsmittel Persulfat und/oder Luftsauerstoff verwendet werden.

2. Verfahren nach Anspruch 1, **dadurch gekennzeichnet, dass** der zumindest eine Zeolith vor der Regeneration vom Wasser abgetrennt wird.

3. Verfahren nach Anspruch 1, **dadurch gekennzeichnet, dass** als Persulfat Peroxodisulfate oder Peroxomonosulfate mit Natrium, Kalium oder Ammonium als Kation verwendet werden.

4. Verfahren nach einem der vorhergehenden Ansprüche, **dadurch gekennzeichnet, dass** die Oxidation thermisch aktiviert wird, vorzugsweise erfolgt die Oxidation bei einer Temperatur im Bereich von 40 bis 100°C, besonders bevorzugt im Bereich von 60 to 80°C.

5. Verfahren nach einem der vorhergehenden Ansprüche, **dadurch gekennzeichnet, dass** der Zeolith mit Übergangsmetallen ausgewählt aus der Gruppe Fe²⁺, Fe³⁺, Cu²⁺, vorzugsweise Fe³⁺ oder einem Erdalkalimetall, vorzugsweise Ca²⁺ oder Mg²⁺ beladen ist.

6. Verfahren nach einem der vorhergehenden Ansprüche, **dadurch gekennzeichnet, dass** die Oxidation unter UV-Bestrahlung mit einer Wellenlänge im Bereich von 220 - 450 nm, besonders bevorzugt im Bereich von 315 - 380 nm erfolgt.

7. Verfahren nach einem der vorhergehenden Ansprüche, **dadurch gekennzeichnet, dass** der zumindest eine Zeolith in Form eines Pulvers, eines Granulats und/oder von Pellets eingesetzt wird.

8. Verfahren nach einem der vorhergehenden Ansprüche, **dadurch gekennzeichnet, dass** der zumindest eine Zeolith ausgewählt ist aus der Gruppe: BEA, FER, MOR, MTW und/oder FAU.

9. Verfahren nach Anspruch 8, **dadurch gekennzeichnet, dass** der zumindest eine Zeolith vom BEA-Typ ist und vorzugsweise ein Modul von 10 bis 200 aufweist.

10. Verfahren nach Anspruch 8, **dadurch gekennzeichnet, dass** der zumindest eine Zeolith eine Kombination vom BEA-Typ und vom FAU-Typ ist und vorzugsweise jeweils ein Modul von 10 bis 200 aufweist.

11. Verfahren nach einem der vorhergehenden Ansprüche, **dadurch gekennzeichnet, dass** der Oxidationsschritt bei einem pH-Wert im Bereich von pH 2,5 - 7, vorzugsweise pH 3 - 5 erfolgt.

12. Verfahren nach einem der vorhergehenden Ansprüche, **dadurch gekennzeichnet, dass** nach dem Oxidationsschritt ein Nachbehandlungsschritt erfolgt, bei dem der pH-Wert auf 8 bis 10 angehoben wird.

13. Verfahren nach einem der vorhergehenden Ansprüche, **dadurch gekennzeichnet, dass** der zumindest eine Zeolith als Festbett oder als Suspension vorliegt.

14. Verfahren nach Anspruch 13, **dadurch gekennzeichnet, dass** das Festbett beim Oxidationsschritt mit einer Persulfat-Lösung gespült wird.

15. Verfahren nach Anspruch 14, **dadurch gekennzeichnet, dass** das Verhältnis vom Volumen des Festbetts zum Volumen der Persulfat-Lösung 4 - 20 beträgt.

16. Verfahren nach den Ansprüchen 14 oder 15, **dadurch gekennzeichnet, dass** das Festbett periodisch mit der Persulfat-Lösung gespült wird.

17. Verfahren nach einem der vorhergehenden Ansprüche, **dadurch gekennzeichnet, dass** der Zeolith in einer wässrigen Suspension vorliegt.

## Claims

1. A method for removing polyfluorinated organic compounds from water by means of an adsorbent and regenerating said adsorbent, at least one zeolite being used as the adsorbent, which is brought into contact with the water and is then regenerated by wet-chemical oxidation, **characterized in that** the oxidation takes place with UV irradiation and at a pH in the range of pH 2.5 to 7.5, and **in that** persulfate and/or atmospheric oxygen are used as an oxidising agent.

2. The method according to Claim 1, **characterized in that** the at least one zeolite is separated from the water before being regenerated.

3. The method according to Claim 1, **characterized in that** peroxodisulfates or peroxomonosulfates with sodium, potassium or ammonium as a cation are used as the persulfate.

4. The method according to any one of the preceding claims, **characterized in that** the oxidation is thermally activated, the oxidation preferably taking place at a temperature in the range of 40 to 100°C, particularly preferably in the range of 60 to 80°C.

5. The method according to any one of the preceding claims, **characterized in that** the zeolite is charged with transition metals selected from the group consisting of Fe²+, Fe³+ and Cu²+, preferably Fe³+, or an alkaline earth metal, preferably Ca²+ or Mg²+.

6. The method according to any one of the preceding claims, **characterized in that** the oxidation takes place with UV irradiation at a wavelength in the range of 220 to 450 nm, particularly preferably in the range of 315 to 380 nm.

7. The method according to any one of the preceding claims, **characterized in that** the at least one zeolite is used in the form of a powder, granulated material and/or pellets.

8. The method according to any one of the preceding claims, **characterized in that** the at least one zeolite is selected from the following group: BEA, FER, MOR, MTW and/or FAU.

9. The method according to Claim 8, **characterized in that** the at least one zeolite is of the BEA type and preferably has a silicate modulus of 10 to 200.

10. The method according to Claim 8, **characterized in that** the at least one zeolite is a combination of the BEA type and the FAU type and preferably has a silicate modulus of 10 to 200 in each case.

11. The method according to any one of the preceding claims, **characterized in that** the oxidation step takes place at a pH in the range of pH 2.5 to 7, preferably pH 3 to 5.

12. The method according to any one of the preceding claims, **characterized in that**, after the oxidation step, a post-treatment step takes place, in which the pH is increased to 8 to 10.

13. The method according to any one of the preceding claims, **characterized in that** the at least one zeolite is in the form of a fixed bed or a suspension.

14. The method according to Claim 13, **characterized in that** the fixed bed is washed with a persulfate solution during the oxidation step.

15. The method according to Claim 14, **characterized in that** the ratio of the volume of the fixed bed to the volume of the persulfate solution is 4 to 20.

16. The method according to Claim 14 or 15, **characterized in that** the fixed bed is periodically washed with the persulfate solution.

17. The method according to any one of the preceding claims, **characterized in that** the zeolite is in the form of an aqueous suspension.

## Revendications

1. Procédé d'élimination de composés organiques polyfluorés de l'eau au moyen d'un adsorbant et de sa régénération, au moins une zéolite étant utilisée en tant qu'adsorbant, qui est mise en contact avec l'eau et qui est ensuite régénérée par oxydation chimique par voie humide, **caractérisé en ce que** l'oxydation est effectuée sous exposition à un rayonnement UV et à un pH dans la plage de pH 2,5 à 7,5 et **en ce que** du persulfate et/ou de l'oxygène atmosphérique sont utilisés en tant qu'oxydant.

2. Procédé selon la revendication 1, **caractérisé en ce que** l'au moins une zéolithe est séparée de l'eau avant la régénération.

3. Procédé selon la revendication 1, **caractérisé en ce que** des peroxodisulfates ou des peroxomonosulfates avec du sodium, du potassium ou de l'ammonium en tant que cation sont utilisés en tant que persulfate.

4. Procédé selon l'une quelconque des revendications précédentes, **caractérisé en ce que** l'oxydation est activée thermiquement, de préférence l'oxydation est effectuée à une température dans la plage de 40 à 100 °C, de manière particulièrement préférée dans la plage de 60 à 80 °C.

5. Procédé selon l'une quelconque des revendications précédentes, **caractérisé en ce que** la zéolithe est chargée en métaux de transition choisis dans le groupe constitué par Fe²⁺, Fe³⁺, Cu²⁺, de préférence Fe³⁺ ou un métal alcalino-terreux, de préférence Ca²⁺ ou Mg²⁺.

6. Procédé selon l'une quelconque des revendications précédentes, **caractérisé en ce que** l'oxydation est effectuée sous exposition à un rayonnement UV avec une longueur d'onde dans la plage de 220 à 450 nm, de manière particulièrement préférée dans la plage de 315 à 380 nm.

7. Procédé selon l'une quelconque des revendications précédentes, **caractérisé en ce que** l'au moins une zéolithe est utilisée sous la forme d'une poudre, d'un granulat et/ou de pastilles.

8. Procédé selon l'une quelconque des revendications précédentes, **caractérisé en ce que** l'au moins une zéolithe est choisie dans le groupe : BEA, FER, MOR, MTW et/ou FAU.

9. Procédé selon la revendication 8, **caractérisé en ce que** l'au moins une zéolithe est de type BEA et présente de préférence un module de 10 à 200.

10. Procédé selon la revendication 8, **caractérisé en ce que** l'au moins une zéolithe est une combinaison du type BEA et du type FAU et présente de préférence un module de 10 à 200 respectivement.

11. Procédé selon l'une quelconque des revendications précédentes, **caractérisé en ce que** l'étape d'oxydation est effectuée à un pH dans la plage de pH 2,5 à 7, de préférence de pH 3 à 5.

12. Procédé selon l'une quelconque des revendications précédentes, **caractérisé en ce que** l'étape d'oxydation est suivie d'une étape de post-traitement au cours de laquelle le pH est augmenté à une valeur de 8 à 10.

13. Procédé selon l'une quelconque des revendications précédentes, **caractérisé en ce que** l'au moins une zéolithe se présente sous forme de lit fixe ou sous forme de suspension.

14. Procédé selon la revendication 13, **caractérisé en ce que** le lit fixe est rincé avec une solution de persulfate lors de l'étape d'oxydation.

15. Procédé selon la revendication 14, **caractérisé en ce que** le rapport du volume du lit fixe au volume de la solution de persulfate est de 4 à 20.

16. Procédé selon les revendications 14 ou 15, **caractérisé en ce que** le lit fixe est rincé périodiquement avec la solution de persulfate.

17. Procédé selon l'une quelconque des revendications précédentes, **caractérisé en ce que** la zéolithe se présente en suspension aqueuse.
